# EUROPEAN PATENT APPLICATION

(11) **EP 1 753 181 A1**
(43) Date of publication of application: **14.02.2007**
(21) Application number: 05743913.5
(22) Date of filing: 25.05.2005
(51) Int. Cl.: H04L 12/56

(54) **MOBILE TERMINAL MANAGING DEVICE, MOBILE TERMINAL, AND COMMUNICATION SYSTEM**

(30) Priority: 31.05.2004 JP 2004162390
(71) Applicant: MATSUSHITA ELECTRIC INDUSTRIAL CO., LTD., Osaka 571-8501 (JP)
(72) Inventor: HIRANO, Jun., c/o Matsushita El.Ind. Co.Ltd, Osaka-shi, Osaka 540-6319 (JP); KOH, Tien-Ming Benjamin., Panasonic Sgp Lab.Ltd, Singapore 534415 (SG); NG, Chan Wah., Panasonic Sgp Lab.Ltd, Singapore 534415 (SG); TAN, Pek Yew., Panasonic Sgp Lab.Ltd, Singapore 534415 (SG)
(74) Representative: Grünecker, Kinkeldey, Stockmair & Schwanhäusser Anwaltssozietät
(86) International application number: PCT/JP2005/009574
(87) International publication number: WO 2005/117367

(57) **Abstract**

A method where home agents dynamically communicate their availability to serve as alternate home agents to each other, and a technology where the registered home agent proactively informs the mobile node to switch home agents are disclosed. According to the technique, a home agent (1000) has new functional blocks to detect the presence of an affiliated roaming mobile node and proceeds to advise the designated home agent of the mobile node regarding their availability. When the registered home agent decides to handover a mobile node, the available alternate home agents are sorted according to the metric of hop count distance and the highest valued is selected so that an available alternate home agent is assigned. A specially formatted mobility option is sent to the mobile node in order to direct it to register to the newly selected alternate home agent.

## Description

### TECHNICAL FIELD

The present invention relates to the communication technology allowing a mobile terminal (mobile node) to keep being connected to the pre-determined communication network when it is roaming.

### BACKGROUND ART

With the emergence and proliferation of wireless technology, more and more terminals are mobile in the sense that they roam through different domains and attach themselves to different points of attachment to the packet-switched data communication network at different points in time while a transport session is ongoing. Such roaming capabilities are provided by solutions such as Mobile Internet Protocol version 4 (IPv4) [the following Non-patent document 1] in IPv4 [the following Non-patent document 2] and Mobile Internet Protocol version 6 (IPv6) [the following Non-patent document 3] in IPv6 [the following Non-patent document 4].

In Mobile IP, each mobile node has a permanent home domain. When the mobile node is attached to its home network, it is assigned a permanent global address known as a home-address. When the mobile node is away, i.e. attached to some other foreign networks, it is usually assigned a temporary global address known as a care-of-address. The idea of mobility support is such that the mobile node can be reached at the home-address even when it is attached to other foreign networks. This is done in the Non-patent document 2 or the Non-patent document 3 with an introduction of an entity at the home network known as a home agent.

Mobile nodes register their care-of addresses with the home agents using Binding Update messages. The home agent is responsible to intercept messages that are addressed to the mobile node's home-address, and forward the packet to the mobile node's care-of address using IP-in-IP Tunneling [the following Non-patent documents 5 and 6]. IP-in-IP tunneling involves encapsulating an original IP packet in another IP packet. The original packet is sometimes referred to as the inner packet, and the new packet that encapsulates the inner packet is referred to as the outer packet.

However, the simple approach of bi-directional tunnel does not cater well to other powerful features of IPv4 and IPv6, such as multi-homing. A node can be multi-homed if there exists a plurality of the external network side interfaces (i.e. egress interfaces) that offer independent routes to the global network. If these interfaces all belong to the same router, then only the router is multi-homed. On the other hand, if these interfaces belong to separate routers, then the site or network on which these routers collectively reside in is multi-homed as well.

Currently, the advantages of multi-homing are not fully exploited. One solution provides multi-homing support at the Transport layer [the following Patent document 1]. According to the technology disclosed in the patent document 1, by having the host system configured with independent front end processor transport providers, each having its own network protocol stack and each being connected to a different TCP/IP network or sub-network or to different portions of the same network which in turn connects to a larger network and is able to provide full multihoming support for a variety of requests from the different types of applications being run on the host system. However, this solution is done at higher network layer than Mobile IP and may respond much poorer when faced with the sporadic changes of a wireless connection. The overheads and inefficiencies involved in a Transport layer change is also significantly higher compared to changes at the IP or Network layer.

Another proposed solution provides for inter home agent communication [the following Non-patent document 7]. The relevant home agents must first be individually identified and manually inputted into the home agents' database. The solution also calls for a multicast of all updates to all available home agents when the mobile node moves, possibly limiting the scalability of the solution due to inefficiency of the overheads involved.

A different solution provides for a multi-homing proxy apparatus [the following Patent document 2]. This solution proposes the use of a central entity that coordinates other entities that control media gateways for transfer of packet traffic to other types of networks. The prime focus is on load balancing managed via a central entity. However, there is no provision for communication between two or more management entities.

A multihomed site or host is physically connected to multiple data links that can be on the same or different networks. This can be seen as the case when a corporate site has links to the global communication network via two different Internet Service Providers (ISPs). A node that is connected via wireless LAN (Local Area Network) (IEEE802.11) as well as the cellular network (GPRS: General Packet Radio Service) also exhibits multihoming for the case of the host. One advantage of multihoming is the network site or node may use an alternate path to reach and be reached by the global network when one of its uplinks fails or is congested.

Service Level Agreements (SLAs) are contracts between a provider and the client guaranteeing a level of network service. While serving as a home agent for a mobile client, should a particular link experience a surge in network traffic, the ISP may not be able to meet the terms dictated in the SLA. In cases of network slowdown, the mobile client would likely continue utilizing the congested link. If a link failure or over-congestion occurs, dynamic home agent address discovery by the mobile client must be initiated at the client-side.

As mobile networks become increasingly prevalent in their usage, it is not an unreasonable assumption for some mobile routers to serve as home agents for nodes within their mobile network. This may be in the case of an aircraft mobile router serving passengers as a home agent during long distance flights or a cruise liner mobile router which acts as a home agent during the week long trip for passenger nodes. Mobile networks typically have wireless connection to the global network. Though wireless technology has improved tremendously over the recent years, it is still more prone to channel instability and noise when compared to wired networks.

However, with the bi-directional tunneling mechanism employed between mobile routers and home agents, connecting nodes only can choose one of a plurality of interfaces of the home agent as their default router. When this interface loses its connection to the global network, it can no longer maintain a tunnel between the home agent and the mobile router. Thus all nodes that make use of the mobile router will lose their connectivity to the global network as well, even though there may exist another interface of the same home agent router that has an active link to the global network. The mobile router and mobile network nodes may eventually realize that their default home agent interface no longer has a route to the global network, and select an alternative home agent.

Such a scheme relies on the mobile router and mobile network nodes to perform their own route discovery. The mobile router eventually has to switch home agents (e.g. Dynamic Home Agent Address Discovery), incurring a lag to recovery. A significant lag in recovery may mean that the mobile network nodes determine their current default route to be down. Mobile network nodes, which may have very limited processing powers (e.g. embedded devices), have their processing load increased and incurs additional delays. In addition, different mobile routers will advertise different subnet prefixes, and thus when mobile nodes eventually switch their default routers, they will have to use different care-of addresses. This requires sending of binding updates to their home-agents, further increasing the lag of recovery.
[Non-patent document 1] Perkins, C. E. et. al., "IP Mobility Support", IETF RFC 2002, Oct 1996.
[Non-patent document 2] DARPA, "Internet Protocol", IETF RFC 791, Sep 1981.
[Non-patent document 3] Johnson, D. B., Perkins, C. E., and Arkko, J., "Mobility Support in IPv6", Internet Draft: draft-ietf-mobileip-ipv6-24.txt, Work In Progress, June 2003.
[Non-patent document 4] Deering, S., and Hinden, R., "Internet Protocol Version 6 (IPv6) Specification", IETF RFC 2460, Dec 1998.
[Non-patent document 5] Simpson, W., "IP in IP Tunneling", IETF RFC 1853, Oct 1995.
[Non-patent document 6] Conta, A., and Deering, S., "Generic Packet Tunneling in IPv6", IETF RFC 2473, Dec 1998.
[Non-patent document 7] Ryuji Wakikawa, Vijay Devarapalli and Pascal Thubert, "Inter Home Agents Protocol (HAHA)", Internet Draft: draft-wakikawa-mip6-nemo-haha-00.txt, Oct 2003.
[Patent document 1] U.S. Patent No. 6,119,170
[Patent document 2] U.S. Patent Publication 2002-118686

However, according to the technique described in each of the above-mentioned documents, a home agent of a mobile node/router needs to synchronize (share) binding cache information and list information of home agents with a plurality of home agents each placed on a different link. To perform this synchronization, information exchanges among home agents, but there is a problem that it is difficult for all of the home agents to proactively have information of others. Moreover, there is a problem that congestion may occur at all by increase of traffic due to the updates to be sent when the updates are sent to all of the home agents on demand in response to some trigger. Moreover, there are other problems that it is difficult for the home agent switching to be performed in view of a network status, and the response to the failure occurrence will become slow because the home agent switching is performed by the mobile node/router side after the failure occurrence when the failure occurs at the network side.

### DISCLOSURE OF THE INVENTION

In the present invention, new functional capabilities are added to a home agent and, to a lesser degree, a mobile router or a mobile node. The home agent will constantly monitor data packets that it forwards. If a packet destined for another home agent is detected, information regarding the source and destination is recorded and a message data packet is sent to the designated home agent informing it of the availability of the current home agent. When the egress link of the designated home agent fails or is congested beyond a pre-determined level, the designated home agent will send a message data packet to selected mobile routers or nodes for which it is serving as a home agent. The message data packet may contain the address of the designated home agent or another home agent. The actual location will be transparent to the selected mobile router or node. Upon receiving the message data packet the mobile router or node would then proceed to terminate the original home agent registration entry and register with the new home agent.

According to the present invention, a home agent of a mobile node can be changed and connectivity between the mobile node and its home agent can be maintained at any time. Moreover, home agent switching can be performed under the initiative of the network side, and it is possible to properly and promptly perform the home agent switching in view of a network status such as the failure occurrence on the network. Moreover, connectivity can be maintained to the mobile node under administration of the failed home agent by changing its home agent to another node even when the home agent or the link to the home agent fails due to, for example, the DoS (Denial of Service) attack.

### BRIEF DESCRIPTION OF THE DRAWINGS

Fig. 1 is a diagram showing a framework of functional blocks that reside within a home agent with multiple interfaces;
Fig. 2 is a diagram showing a structure of a message used by the System Manager to pass the packet selection criteria to the Interface Manager;
Fig. 3 is a diagram showing a structure of a message used by the Interface Manager to inform the System Manager of the detection of a mobile node;
Fig. 4 is a diagram showing a structure of a message used by the Interface Manager to inform the System Manager of an interface failure;
Fig. 5 is a diagram showing a structure of a message to be used to inform other home agents regarding the availability of the host home agent;
Fig. 6 is a diagram showing a structure of a message to be used by the System Manager to update the Route Manager with possible interfaces or alternate home agents;
Fig. 7 is a diagram showing a structure of a message to be used as a query from the System Manager to the Route Manager;
Fig. 8 is a diagram showing a structure of a new mobility option;
Fig. 9 is a network diagram characterized by a home network with multiple home agents with multiple interfaces (multihomed site or multihomed host);
Fig. 10 is a flow diagram of operation taken in the case depicted in Fig. 9;
Fig. 11 is a diagram showing a framework of functional blocks that reside within a client home agent utilizing a central Route Manager; and
Fig. 12 is a network diagram characterized by client home agents with a central Route Manager.

### BEST MODE FOR CARRYING OUT THE INVENTION

### <First embodiment>

This invention involves nodes that serve as home agents to mobile routers or mobile nodes that are roaming in a global network. The home agent itself may be a mobile router. The invention requires that the home agent passively monitors alternative routes to the global network as well as be informed of other nodes able and willing to serve as alternate home agents. When the situation demands it, the home agent may actively switch the mobile routers or mobile nodes registered with it to another interface or an alternate home agent.

To help understand the disclosed invention, the following definitions are used.

A "packet" is a self-contained unit of data of any possible format that could be delivered on a data network. A "packet" normally consists of two portions: a "header" portion and a "payload" portion. The "payload" portion contains data that are to be delivered, and the "header" portion contains information to aid the delivery of the packet. A "header" portion must have a source address and a destination address to respectively identify the sender and recipient of the "packet".

A "packet tunneling" refers to a self-contained packet being encapsulated into another packet. The act of "packet tunneling" is also referred to as "encapsulation" of packets. The packet that is being encapsulated is referred to as the "tunneled packet" or "inner packet". The packet that encapsulates the "inner packet" is referred to as the "tunneling packet" or "outer packet". Here, the entire "inner packet" forms the payload portion of the "outer packet".

A "mobile node" is a network element that changes its point of attachment to the global data communication network. It may be used to refer to an end-user terminal, or an intermediate network element that serves as a gateway, a router or an intelligent network hub that can change its point of attachment to the global data communication network. The "mobile node" that is an end-user terminal is more specifically referred to as a "mobile host"; whereas the "mobile node" that is an intermediate network element that serves as a gateway, a router or an intelligent network hub is more specifically referred to as a "mobile router". This term "mobile node" is used interchangeably with the term "registered node" for the purposes of this description.

A "registered node" is a network element that performs some kind of registration with another network notifying it of the registered node's network location. The network element itself may be static or mobile with regard to its point of attachment to the global data communication network. This term "registered node" is used interchangeably with the term "mobile node" for the purposes of this description.

A "home agent" is a network entity that resides at the home domain of a mobile node that performs registration services of care-of addresses of the mobile node when it is away, and to forward packets addressed to the home address of the mobile node to the care-of address of the mobile node.

A "Binding Update" is a message sent from a mobile node to its home agent or a corresponding node that informs the recipient the current care-of address of the sender. This forms a "binding" between the care-of address and the home address of the mobile node at the recipient.

A "Binding Refresh Request" is a message sent from a home agent or a corresponding node to a mobile node that informs the recipient to send a Binding Update message to the sender.

In the following descriptions, for the purpose of explanation, specific numbers, times, structures, and other parameters are set forth in order to provide a thorough understanding of the present invention. However, it will be apparent to anyone skilled in the art that the present invention may be practiced without these specific details.

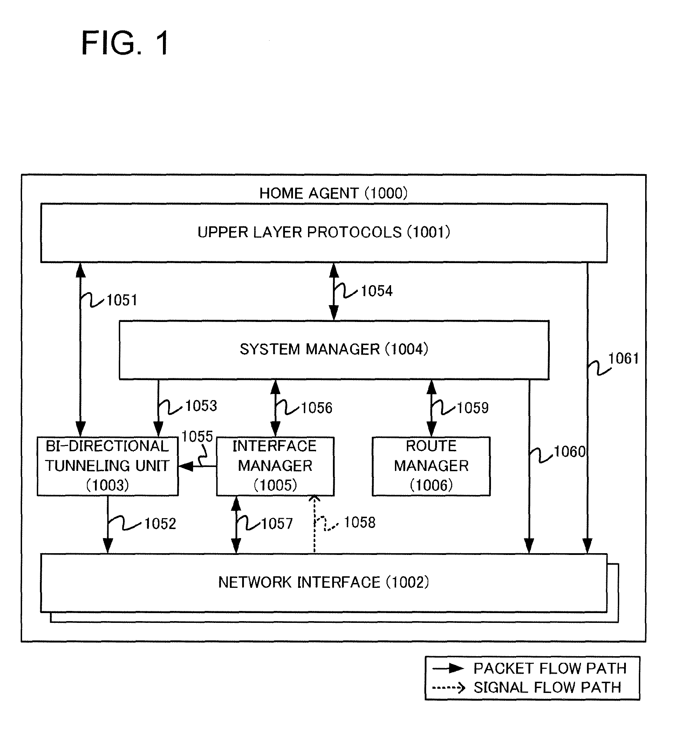

Fig. 1 shows the required functional components found within the Home Agent (1000) for the proper operation of the invention. It is possible for the Route Manager (1006) to be apart, this is described in the Second Embodiment. The Upper Layer Protocols (1001) are a combination of all the protocols and application layers that reside above and include the IP layer. The normal IPv6 protocols, for example ICMPv6 (Internet Control Message Protocol version 6), may directly send out message packets to the Network Interfaces (1002) via the packet flow path (1061).

The Network Interfaces (1002) are representative of the plurality of possible interface cards such as Ethernet (trademark) cards or wireless interface cards such as bluetooth (trademark) cards. The Network Interfaces (1002) include the software drivers and protocols required to operate the hardware. The packet flow path (1057) is taken by IP layer protocol data packets that have already been processed by the lower layer protocols such as Ethernet (trademark) or GPRS and are being passed to the Interface Manager (1005). The signal flow path (1058) is representative of a notification signal used by the interface to inform the higher layer applications of hardware failure or some other fault. This signal flow path (1058) may take the form of an electrical signal or otherwise and is used to inform the Interface Manager (1005).

Certain protocol stacks such as the Mobile IP protocol may make use of the Bi-directional Tunneling Unit (1003). The Bi-directional Tunneling Unit (1003) performs bi-directional tunneling for incoming and outgoing packets. It encapsulates all outgoing packets in the packet flow path (1051) from the Upper Layer Protocols (1001) to the packet flow path (1052) to be sent via a suitable Network Interface (1002). It also decapsulates incoming received packets and passes it to the Upper Layer Protocols (1001) via the packet flow path (1051).

The Interface Manager (1005) has two major functionalities. The first functionality is to scan the packets that are received by the Network Interfaces (1002). The System Manager (1004) will send the some selection criteria for the Interface Manager (1005) to check for. For example the selection criteria possibly include network prefixes or specific home agent addresses.

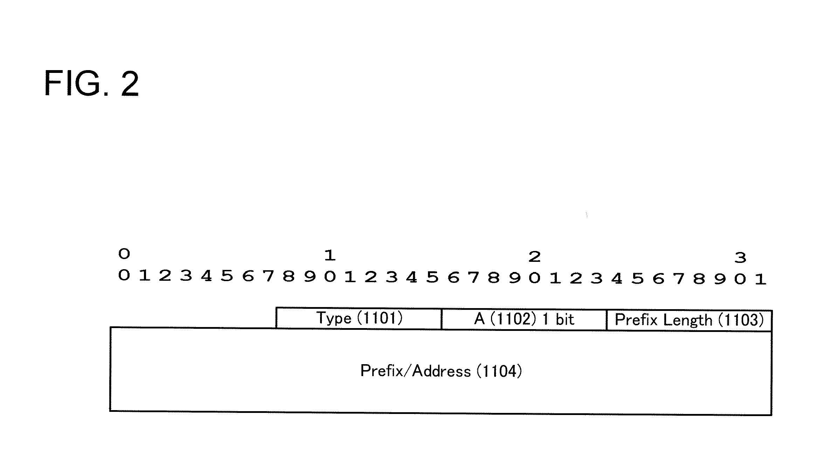

A possible format for the packet is given in Fig. 2. This packet is sent by the System Manager (1004) to the Interface Manager (1005) when a valid condition occurs. Examples of valid conditions would include when the host unit first starts up or when an administrator changes the configuration. Upon receiving the packet, the Interface Manager (1005) would take note of whether the information is to be added or deleted from the database of the selection criteria, depending on the "A" field and take the appropriate action. The Interface Manager (1005) will now check every packet that passes through any of the Network Interfaces (1002). These packets are received via the packet flow path (1057). The purpose of the check is to determine if these are Mobile IP packets destined for a home agent that is specified by the selection criteria given by the System Manager (1004). A possible method would be by comparing the Destination Address field with the selection criteria prefixes and addresses given by the System Manager (1004). For determination of whether this is a Mobile IP packet, the IPv6 extension headers may be examined to look for Mobile IP extension headers otherwise known as Mobility Headers (MH). A specific example would be to look for a value of IPPROTO_NONE within the Payload Proto field and a value of "5" within the MH Type field [see the Non patent document 3]. This indicates that the packet is actually a Binding Update message to the selected home agent.

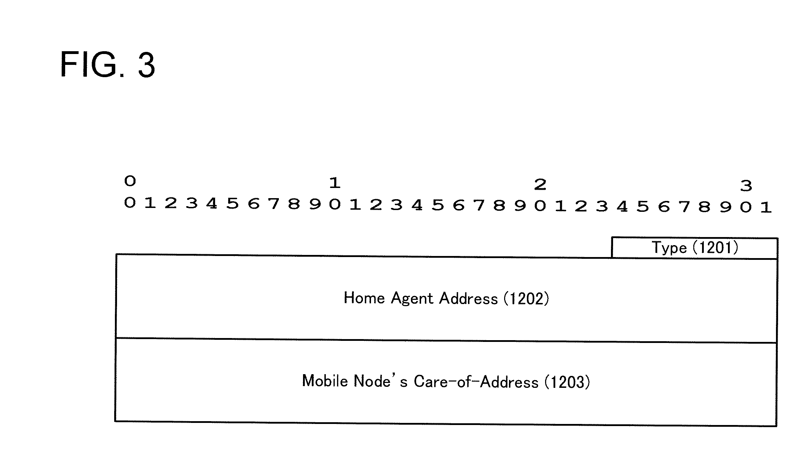

A packet is now sent to inform the System Manager (1004) of the event. A possible format for this packet is shown in Fig. 3. This packet is sent upon intercepting a Binding Update message whose destination address matches any of the selection criteria found in the Interface Manager's (1005) selection criteria database. The behavior of the recipient (the System Manager (1004)) is given in the description of the System Manager (1004) below.

The intercepted packet is then released via the packet flow path (1057) to the appropriate Network Interface (1002) to be forwarded according to normal routing rules. All received packets are either allowed to proceed along their journey via the packet flow path (1057) or else passed to the Bi-directional Tunneling Unit (1003) via the packet flow path (1055) for normal processing.

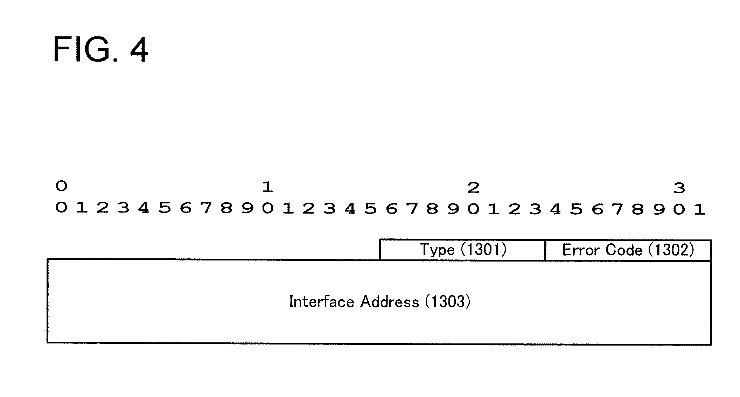

The other functionality of the Interface Manager (1005) is to inform the System Manager (1004) of any problems or potential problems with the Network Interfaces. The Interface Manager (1005) will likely be configured to be on the look out for some kind of metric to determine the load on the various Network Interfaces (1002). This may be utilization, bandwidth utilization or interface failure. Once some threshold value has been reached based on some possible algorithm (for example 80% utilization percentage on a Network card), a packet is send to the System Manager (1004) via the packet flow path (1056) informing it of the problem. A possible format for the packet is given in Fig. 4. The behavior of the recipient (the System Manager (1004)) is given in the description of the System Manager (1004) below.

The Route Manager (1006) stores information and should contain the tools and functionalities to extract the relevant information requested by the System Manager (1004) via the packet flow path (1059). The information is stored in the form of a table detailing the alternate home agents available and their related information as given by the System Manager (1004) via the packet flow path (1059). Examples of the information include the indicated mobile node, the address of the alternate home agent and the hop count distance of the alternate home agent interface, the alternate home agent interface's preference value or some other metric.

The information extraction functionalities or tools would consist of supplying the requesting System Manager (1004) with the relevant entry when presented with criteria from the said System Manager (1004). An example would be the System Manager (1004) requesting for an alternate home agent for a certain mobile node with the highest preference value or some other metric.

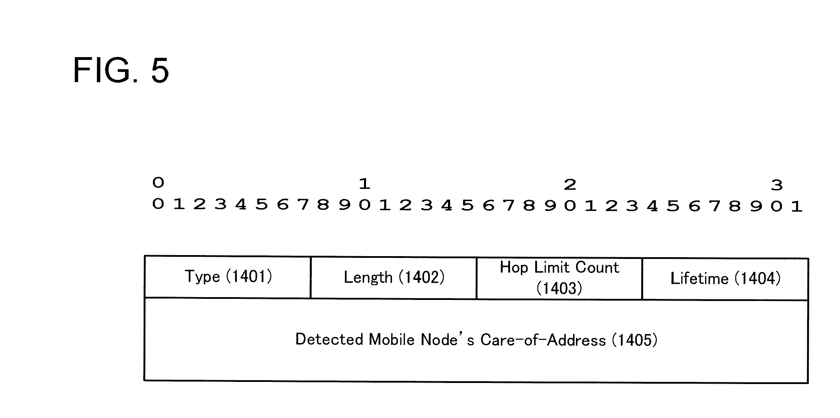

The System Manager (1004) upon receiving information conveyed by the packet described in Fig. 4 via packet flow path (1056) from the Interface Manager (1005) regarding the detection of a mobile node should then proceed to send the detected home agent with information regarding its availability for the detected mobile node via the packet flow path (1060). An example of the data packet to be sent is given in Fig. 5.

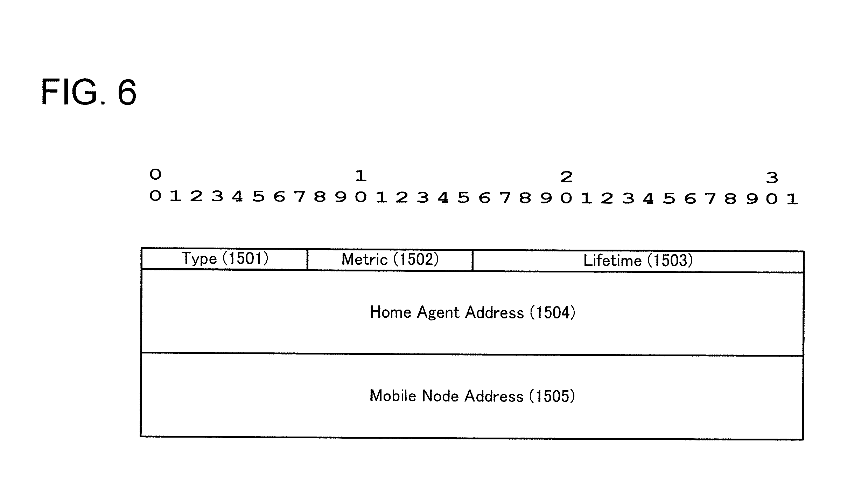

The System Manager (1004) should update the Route Manager (1006) with information regarding the interface on which it is serving as a home agent. An example of the format of the update message is given in Fig. 6. This update can be done upon start-up or configuration change. Should the System Manager (1004) receive any packets from other home agents informing of their availability for a particular mobile node, that information is also relayed to the Route Manager (1006) using the message format of Fig. 6 after the home address of the mobile node has been resolved using its care-of address.

Upon detection of an interface failure or overloading conveyed by the packet (which is described in Fig. 4) via the packet flow path (1056) from the Interface Manager (1005), the System Manager (1004) should also proceed to update and then query the Route Manager (1006) via the packet flow path (1059) for alternate routes or interfaces to be used. A possible format for the update packet to indicate failure is to set the value of the lifetime field (1503) of the packet given in Fig. 6 to zero, thereby expiring the entry.

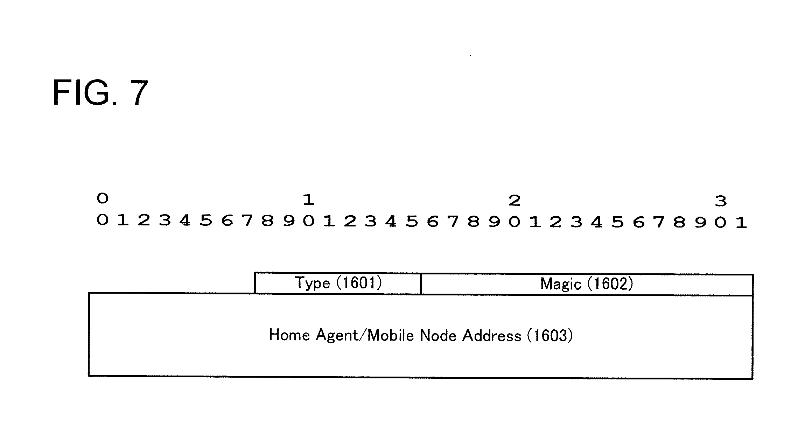

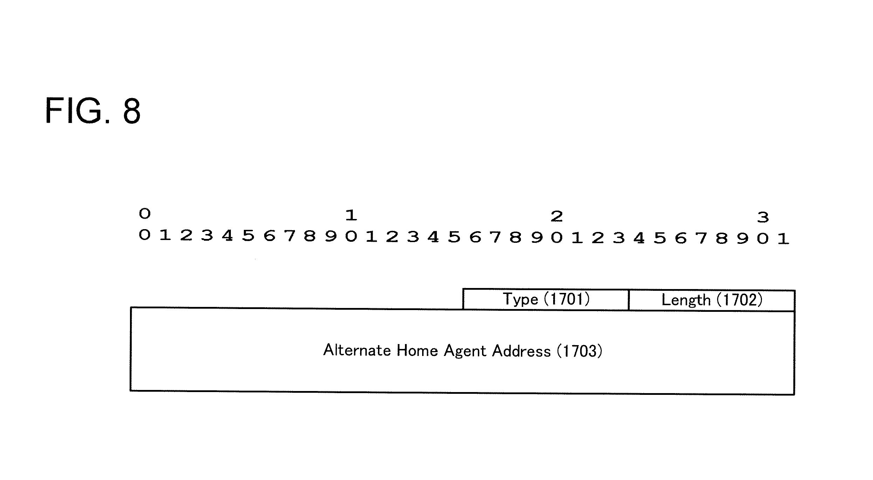

An example of the query packet is given in Fig. 7. A query packet is sent for each mobile node for which the home agent is acting for. The reply packet with the address of the alternate home agent, which may be another interface on the current home agent, will be sent via the packet flow path (1059) from the Route Manager (1006) to the System Manager (1004). A possible message format is similar to the query packet format given in Fig. 7. The System Manager (1004) should then proceed to inform the affected mobile nodes requesting them to change their home agent by sending them a packet via the packet flow path (1053). An example of the packet to be sent is given in Fig. 8.

The following describes the various example message formats to be used in the solution of the present invention.

The format for the message used by the System Manager (1004) to pass the packet selection criteria to the Interface Manager (1005) is given in Fig. 2.

Type (1101) refers to an arbitrary number used to identify the packet. A (1102) is a flag to signify if the following entry is to be added or deleted from the list of selection criteria.
Prefix Length (1103) is used to determine the number of bits in the Prefix/Address (1104) field that is to be used as selection criteria. Prefix/Address (1104) is the prefix or address that is to be used for selection.

The format for the message used by the Interface Manager (1005) to inform the System Manager (1004) of the detection of a mobile node is given in Fig. 3.

Type (1201) refers to an arbitrary number used to identify the packet. Home Agent Address (1202) shows the designated home agent address taken from the inspected packet's destination field.
Mobile Node's Care-of Address (1203) is the mobile node's current Care-of Address as taken from the inspected packet's source field.

The format for the message used by the Interface Manager (1005) to inform the System Manager (1004) of an interface failure is given in Fig. 4.

Type (1301) refers to an arbitrary number used to identify the packet. Error Code (1302) gives the type of error or failure that the interface is experiencing. Different numerical values may be assigned for various conditions such as various levels of congestion and hardware failures. Interface Address (1303) is the address of the interface that is facing the given problem.

The format of the message to be used to inform other home agents regarding the availability of the host home agent is given in Fig. 5.

Type (1401) refers to an arbitrary number used to identify the packet. Length (1402) is the length of the packet. Hop Limit Count (1403) is the initial value of the Hop Count field in the IPv6 header. This is used as an example of metric to gauge how far away the current host home agent is from the designated home agent. The basic assumption is that the nearest home agent to the roaming mobile node is also the furthest from the designated home agent. The hop count distance may be obtained by subtracting the received Hop Count field value in the IPv6 header from the given initial value here. Lifetime (1404) is the time for which this information is valid. Detected Mobile Node Care-of Address (1405) is the care-of address of the mobile node which the host home agent had detected. The address of the interface which is willing and able to serve as the home agent is given in the Source field of the IPv6 header.

The format of the message to be used by the System Manager (1004) to update the Route Manager (1006) of possible interfaces or alternate home agents is given in Fig. 6.

Type (1501) refers to an arbitrary number used to identify the packet. Metric (1502) is a numerical value to be used in calculating the desirability of using this entry. Typically used in choosing one among alternate home agents where the metric value may be a function of how close they are to the mobile node. Lifetime (1503) is the valid lifetime for this entry after which it is expired and removed. Local interfaces may be denoted as having the maximum possible value (setting the bits all to 1). If an incoming packet has this field set to 0, any corresponding entries in the Route Manager (1006) should be expired and removed. Home Agent Address (1504) is the address of the local interface or the alternate home agent. Mobile Node Address (1505) is the address of the mobile node which the alternate home agent is for. Local interfaces will typically have this field empty.

The format of the message to be used as a query from the System Manager (1004) to the Route Manager (1006) is given in Fig. 7. The same format is used in the reply message from the Route Manager (1006) to the System Manager (1004).

Type (1601) refers to an arbitrary number used to identify the packet. The request and reply packets would have different values. Magic (1602) is a randomly chosen number used to match request and reply packet pairs. A request to be sent has a randomly generated value and the reply packet should carry the same value as the request. Home Agent/Mobile Node Address (1603) field gives the mobile node address to check for in the request message and the address of the selected home agent in the reply message.

The mobile node is required to understand the new mobility option illustrated in Fig. 8.

Type (1701) refers to an arbitrary number used to identify the option. Length (1702) is the length of the option, in octets, excluding the type and length field. Alternate Home Agent Address (1703) is the 128 bit address of the alternate home agent. This may be an alternate interface on the same home agent or another different home agent.

Mobile nodes receiving this new option must first check that the source address has a corresponding entry in their binding update list; otherwise the option should be ignored. Upon verifying the option, should the mobile node choose to retain its binding cache entry, it must then send a Binding Update (BU) with a lifetime of zero to the source address of the packet containing this option. A new binding update should then be sent to the address given in the Alternate Home Agent Address field.

A specific example of how this mobility option can be transmitted may be through the use of the Binding Refresh Request from the home agent to the mobile node. Arbitrarily, this option may be carried as a newly defined IPv6 extension header. The most important function of this option is to allow the mobile node to determine that the source of the message is its registered home agent and the new home agent address to be used.

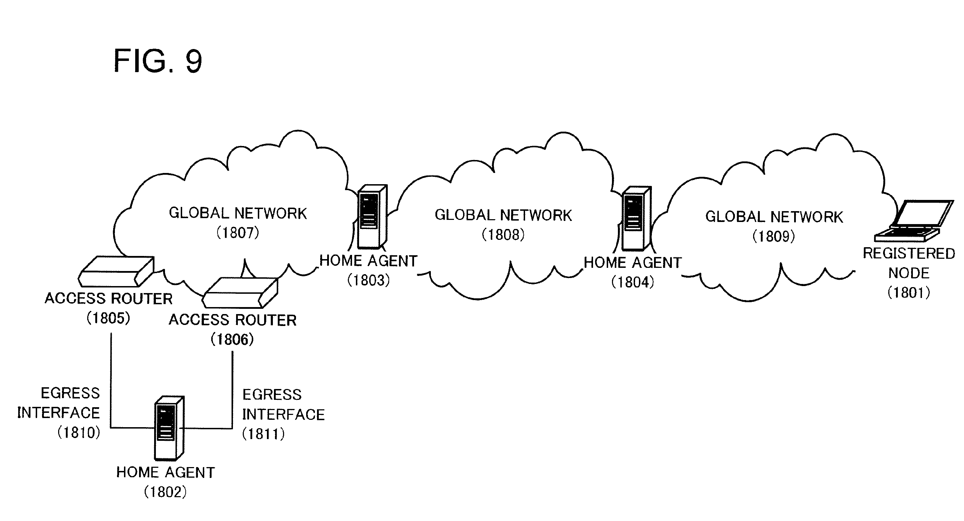

In the first embodiment, the case when a home agent is multihomed and there are alternate home agents is described. Fig. 9 is a schematic view of the network. The Home Agent (1802) is connected to the Global Network (1807) via the egress interface (1810) to the Access Router (1805) and the egress interface (1811) connected via Access Router (1806). It is serving as the home agent to the Registered Node (1801).

There exist alternate home agents. The Home Agent (1803) resides between the Global Network (1807) and Global Network (1808). Similarly, the Home Agent (1804) resides between the Global Network (1808) and Global Network (1809).

The Registered Node (1801) represents any mobile terminal that utilizes the Mobile IP protocol stack. The Registered Node (1801) may easily represent a mobile router serving a mobile network populated with other mobile nodes. The Registered Node (1801) is originally roaming within the Global Network (1807). The egress interface (1810) of the Home Agent (1802) is serving as the home agent interface. However, when the egress interface (1810) goes down possibly due to congestion, the Interface Manager (1005) will inform the System Manager (1004). The System Manager (1004) will then consult with the Route Manager (1006) to obtain an alternate route. The Route Manager (1006) will reply with the address of the other egress interface (1811) and the System Manager (1004) will proceed to send a message informing the Registered Node (1801) to switch home agents to the egress interface (1811).

Assume that the Registered Node (1801) roams to the Global Network (1809). The Registered Node (1801) proceeds to send a Binding Update (BU) message to its original home agent which is the egress interface (1810). While the BU is en route to the Home Agent (1802), the packet passes through alternate home agents (Home Agent (1803) and Home Agent (1804)). Both Home Agent (1803) and Home Agent (1804) detect the packet and proceed to update the Home Agent (1802) with their respective chosen interface address. If the egress interface (1811) is under congestion, the Interface Manager (1005) will once again notify that to the System Manager (1004). The Route Manager (1006), when queried by the System Manager (1004) for the Registered Node (1801), will realize that there are two available alternate home agents (Home Agent (1803) and Home Agent (1804)) for the Registered Node (1801). Choosing based on metric, it will select the Home Agent (1804) as the better home agent as the hop distance is further and therefore hopefully nearer to the Registered Node (1801).

The System Manager (1004) will proceed to send a message bearing the mobility option described in Fig. 8 to the Registered Node. Upon receiving the mobility option, the Registered Node (1801) should first verify the message. An example would be to check that the source field of the IPv6 packet contains the address of its registered Home Agent (1802). If so, it should proceed to switch home agents to the Home Agent (1804) with the interface address within the message.

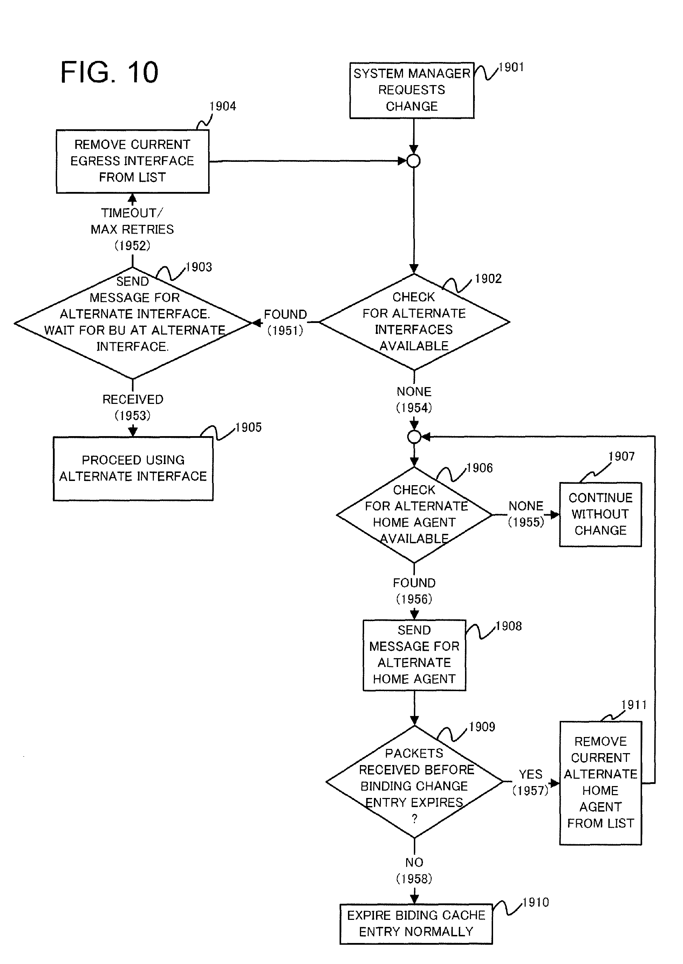

In this situation, the algorithm depicted in Fig. 10 will be used. After the Interface Manager (1005) detects interface failure, it will inform the System Manager (1004) to in turn update and request the Route Manager (1006) for an alternate route for the mobile node (step 1901). The Route Manager (1006) will first check if there are local interfaces available (local interfaces which can be alternate interfaces) (step 1902). If there are no alternative local routes (path 1954), then a check will be made for alternate home agents (step 1906).

If an alternative interface is found (path 1951), a message (Fig. 8) bearing the address of the alternative interface is sent. This may require the setup of new tunnels by the Bi-directional Tunneling Unit (1003) if the original egress interface is down. The home agent will now wait for a BU from the mobile router for the alternate interface (step 1903). The message (Fig. 8) may be resent an arbitrary number of times after timeout.

Assuming no BUs are received (in case of timeout, or in case that the retry number reaches the maximum) at step 1903, the home agent may proceed to repeat the sequence for a new alternate interface (path 1952). The previously tried interface is removed from the list (step 1904), and thus it will not be considered for this mobile router.

Should a BU be received on the alternate interface at step 1903 (path 1953), the old binding cache entry is immediately expired and the alternate interface will be used by adding a new entry for the mobile node binding it to the new interface address (step 1905).

If Route Manager (1006) checks at step 1906 and finds no alternate home agents (path 1955), the operation will continue without any changes (step 1907). If the original interface is down, the home agent will now be in a disconnected state.

Should the Route Manager (1006) have information on the availability of an alternative home agent (i.e. find an alternative home agent available) (path 1956) at step 1906, however, a message (Fig. 8) showing the address of the alternative home agent is sent (step 1908). If the original egress interface is down, the Route Manager (1006) will once again be consulted for an alternative route. This may possibly be an ingress route (route of the inner-side of the network) via the alternative home agent detected using some other method. New tunnels would then be set-up by the Bi-directional Tunneling Unit (1003). The home agent (1000) will now wait to see if any packets are received from the mobile router other than a possible BU to expire the binding cache entry (step 1909).

Assuming packets are still being received at step 1909 (path 1957), the home agent proceeds to repeat the sequence for a new alternate home agent if available. The previously tried home agent is removed from the list (step 1911), and thus it will not be considered for this mobile router.

If no further packets are received from the mobile router (path 1958), the binding cache entry is left to expire naturally when its Lifetime value reaches zero (step 1910).

### <Second embodiment>

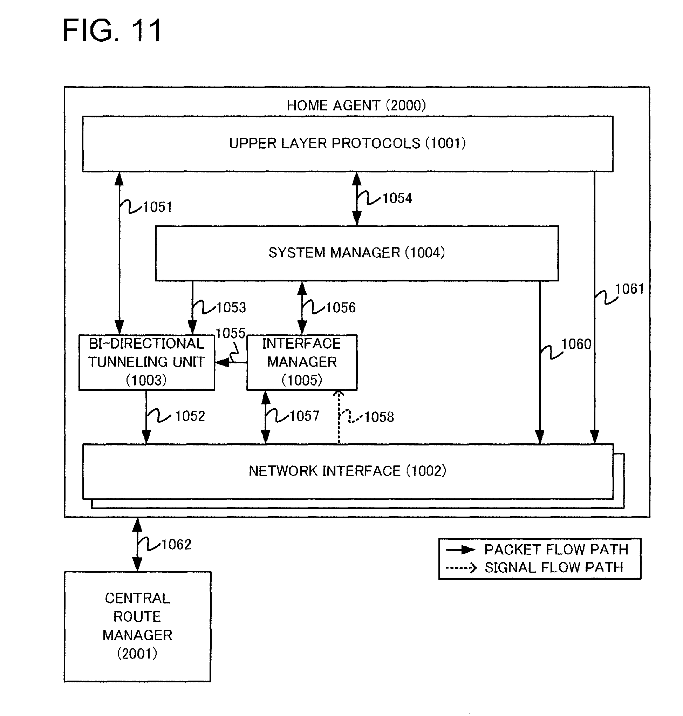

In the second embodiment, the case of a home network where there exists a Central Route Manager (2001) is described. In the case when only a Central Route Manager (2001) is needed, the required functional components for the Home Agent (2000) are simpler as seen in Fig. 11. The layout is similar to the architecture shown in Fig. 1, except that the Route Manager (1006) block and associated packet flow path (1059) is missing. Instead, the System Manager (1004) in each host home agent would send all updates to the Route Manager in the Central Route Manager (2001) via the packet flow path (1062). The Central Route Manager (2001) would have the functional components described in Fig. 1. The location information of the Central Route Manager (2001) may be statically configured in each of the client home agents.

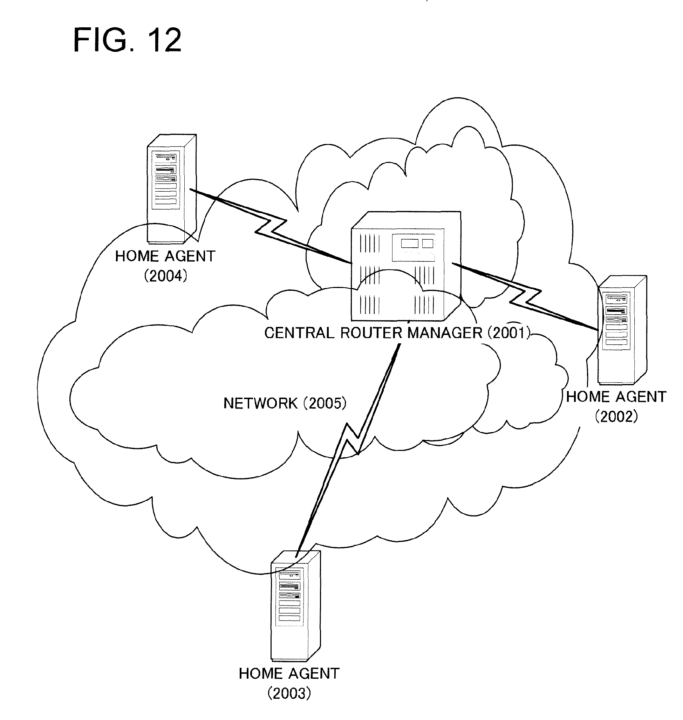

Fig. 12 shows a possible deployment of client home agents (Home Agent (2002), Home Agent (2003) and Home Agent (2004)) all sending their updates and requests through a Network (2005) to the Central Route Manager (2001). The Central Route Manager (2001) would consolidate all the update information and send the respective reply messages.

Modifications to the description in the First Embodiment would include the update of local interfaces serving as home agent interfaces. In the case of the central Route Manager, the local interfaces on the Central Route Manager (2001) may or may not have the functionalities of a home agent. The local interfaces for the client home agents should only be updated with the Route Manager (1006) when they are serving as a home agent interface for some mobile node. The Type (1401) field described in the message format in Fig. 5 may also have a different value when the client home agents are updating the Central Home Agent (2001) to signify that the given Detected Mobile Node Care-of Address (1405) field gives the home address of the mobile node and not its care-of address.

The messages described in Fig. 6 and Fig. 7 will now be transported using IPv6. Possible implementation examples would be to carry them as the payload of the IPv6 packet. The other messages described in the First Embodiment do not require changes.

A major advantage of having a Central Route Manager (2001) is the savings in terms of storage space and processing power for the other home agents. The other home agents may thus be manufactured relatively cheaper with the data storage and processing capability needed to search and process the various entries offloaded to the Central Route Manager (2001). The centralized approach offers the additional benefit of gathering all the relevant information in one place, enabling the employment of more effective and efficient algorithms for route selection.

### INDUSTRIAL APPLICABILITY

The present invention enables the change of the mobile node's home agent and can be applied to the field of the communication technology (especially, wireless communication technology) of the mobile terminal.

## Claims

1. A mobile terminal managing device capable of serving as a home agent which manages location information of a mobile terminal connecting to a communication network, comprising:
a single or plurality of network interfaces, at least on one of which an address is set to specify the home agent of the mobile terminal, the network interfaces being capable of connecting to the communication network;
an interface manager for detecting a status of the network interface on which the address as the home agent is set; and
a system manager for initiating a process to set an address of a different network interface from the network interface serving as the home agent or an address of a different communication apparatus connected to the communication network, as an address of the home agent of the mobile terminal when the status detected by the interface manager matches a pre-determined condition.

2. The mobile terminal managing device according to claim 1 comprising an information storage means for storing information on the different communication apparatus set as the home agent of the mobile terminal by the system manager, or information on the different communication apparatus.

3. The mobile terminal managing device according to claim 1 wherein the interface manager comprises:
a detecting means for detecting a variable status of utilization level of each network interface; and
a notifying means for, if the variable status of utilization level detected by the detecting means reach a pre-determined value, notifying that as the pre-determined condition to the system manager.

4. The mobile terminal managing device according to claim 1 wherein the interface manager comprises:
a detecting means for detecting a status of a hardware failure occurrence at each network interface; and
a notifying means for, if the hardware failure occurrence is detected by the detecting means, notifying that as the pre-determined condition to the system manager.

5. A mobile terminal managing device capable of serving as a home agent which manages location information of a mobile terminal connecting to a communication network, comprising:
a single or plurality of network interfaces capable of connecting to the communication network;
an interface manager capable of monitoring the single or plurality of network interfaces and detecting a presence of a mobile terminal which can be placed under control in order to serve a home agent; and
a system manager for, if the mobile terminal which can be placed under control is detected by the interface manager, generating a notification message to notify that the mobile terminal can be placed under control to a current home agent of the mobile terminal.

6. The mobile terminal managing device according to claim 5 wherein the interface manager comprises:
a packet inspecting means for inspecting IPv6 packets passing via all the network interfaces;
an address monitoring means for monitoring whether there is an address defined by pre-determined selection criteria as an address in the IPv6 destination address field, referring to the pre-determined selection criteria; and
a header checking means for inspecting IPv6 extension header to check a value of IPPROTO_NONE in a payload proto field and a value of 5 in a MH field;
whereby a binding update message from the mobile terminal can be detected and an address of a current home agent of the mobile terminal can be acquired.

7. The mobile terminal managing device according to claim 5 wherein the notification message generated by the system manager includes a format such that a hop number from the home agent to a current home agent of the mobile terminal is described.

8. The mobile terminal managing device according to claim 7 wherein the interface manager comprises:
a packet inspecting means for inspecting IPv6 packets passing via all the network interfaces;
an address monitoring means for monitoring whether there is an address defined by pre-determined selection criteria as an address in the IPv6 destination address field, referring to the pre-determined selection criteria; and
a header checking means for inspecting IPv6 extension header to check a value of IPPROTO_NONE in a payload proto field and a value of 5 in a MH field;
whereby a binding update message from the mobile terminal can be detected and an address of a current home agent of the mobile terminal can be acquired.

9. A mobile terminal managing device capable of serving as a home agent which manages location information of a mobile terminal connecting to a communication network, comprising:
a single or plurality of network interfaces, at least on one of which an address is set to specify the home agent of the mobile terminal, the network interfaces being capable of connecting to the communication network;
a notification message monitoring means for monitoring a pre-determined notification message from a communication apparatus which can serve as a home agent of the mobile terminal when a binding update message from the mobile terminal is received by the network interface on which the address as the home agent is set; and
a system manager for initiating a process to set the communication apparatus as the home agent of the mobile terminal when the notification message from the communication apparatus is received.

10. The mobile terminal managing device according to claim 9 comprising a route manager for referring to a hop number in the notification message and detecting a communication apparatus nearest to the mobile terminal if the notification message is received from each of a plurality of the communication apparatuses, the mobile terminal managing device being so arranged as to initiate a process to set the communication apparatus nearest to the mobile terminal detected by the route manager as the home agent of the mobile terminal when the notification message from the communication apparatus is received.

11. The mobile terminal managing device according to claim 10 being so arranged as to notify an address of the communication apparatus nearest to the mobile terminal by the route manager, to the mobile terminal.

12. A mobile terminal capable of connecting to a communication network and communicating in roaming by having its location information managed by a home agent, comprising means for directing to switch a home agent from a communication apparatus acting as the home agent to a different network interface of the communication apparatus from a network interface serving as the home agent or a different communication apparatus, and switching the home agent when a notification message including an address of the home agent to be switched is received.

13. A communication system including a plurality of mobile terminal managing devices capable of serving as home agents which manage location information of a mobile terminal connecting to a communication network, comprising a central route manager for storing and managing an address of a network interface of each of the plurality of the mobile terminal managing devices, the network interface capable of serving as a home agent for a certain mobile terminal.
